# DEMANDE DE BREVET EUROPEEN

(11) **EP 0 542 589 A1**
(43) Date de publication de la demande: **19.05.1993**
(21) Numéro de dépôt: 92402873.1
(22) Date de dépôt: 21.10.1992
(51) Int. Cl.: G02B 6/44

(54) **Elément porteur, notamment pour câble optique**

(30) Priorité: 14.11.1991 FR 9113990
(71) Demandeur: E G 1, Sainte Geneviève (Oise) (FR)
(72) Inventeur: Chapelet, Franck, F-60000 Beauvais (Oise) (FR)
(74) Mandataire: Cabinet HERRBURGER

(57) **Abrégé**

a) Elément porteur, notamment pour câble optique.
b) Elément caractérisé en ce qu'il comprend :
   - une partie intérieure (11) formée de fibres aramides (13)
   - une partie périphérique (14) entourant la partie intérieure (11) et formée de fibres de verre (16)
   - un remplissage de l'intervalle entre toutes les fibres (aramides (13) et de verre (16)) par une résine thermodurcissable (17).

## Description

La présente invention concerne un élément porteur, notamment pour câble optique, formé de fibres de verre et de résine conditionnées pour former un ensemble composite.

Les câbles optiques se composent de fibres optiques en général portées par un noyau à alvéoles, muni d'éléments de renfort mécaniques ou éléments porteurs qui ont pour rôle de protéger les fibres optiques, particulièrement sensibles à l'allongement et à la compression, contre de telles contraintes induites lors de la pose ou de la mise en place des câbles optiques. Pour jouer leur rôle, ces éléments porteurs doivent avoir un module de traction élevé, une excellente tenue en compression et un faible coefficient de dilatation ainsi qu'une bonne tenue en courbure de façon précisément à éviter d'induire dans les fibres optiques, les différentes contraintes mécaniques auxquelles sont soumis les câbles.

Actuellement, on utilise des renforts métalliques ou des renforts composites qui présentent tous certains inconvénients.

Les renforts ou porteurs métalliques massifs, en acier, sont certes résistants mais présentent une raideur trop importante et induisent de ce fait, surtout au niveau des courbures du câble, un manque de souplesse dans le câble. Pour remédier à cette rigidité des éléments porteurs métalliques massifs, on utilise des cordes en acier. Cette solution est cependant évitée du fait de la conductivité de l'acier qui crée certaines contraintes.

La seconde solution, qui est la plus répandue actuellement, est celle des porteurs en fibres de verre imprégnées de résine thermodurcissable. De tels porteurs sont en général fabriqués par traction-extrusion (pull-trusion) de fibres préalablement imprégnées et que l'on fait passer dans une filière chauffée. La résine thermodurcissable durcit ainsi au fur et à mesure que le profilé passe à travers la filière.

Ces éléments porteurs présentent l'inconvénient d'avoir un module de traction relativement faible.

La présente invention a pour but de créer un élément porteur notamment destiné à un câble optique, alliant une excellente résistance à la traction, à la compression, présentant un faible coefficient de dilatation et une bonne tenue à la courbure pour protéger parfaitement les fibres optiques contre les contraintes mécaniques tout en aboutissant à un coût de réalisation compatible avec les données économiques.

A cet effet, l'invention concerne un élément porteur notamment pour câble optique caractérisé en ce qu'il comprend :
- une partie centrale formée de fibres aramides
- une partie périphérique entourant le coeur et formée de fibres de verre
- un remplissage de l'intervalle entre les fibres aramides et les fibres de verre par une résine thermodurcissable.

Cet élément porteur présente un excellent module de traction du fait de l'interaction des fibres d'aramide et de la résine ainsi qu'avec les fibres de verre de la partie extérieure de l'élément porteur. Cette "enveloppe", qui en fait est intégrée à l'élément composite, protège les fibres intérieures contre toute mauvaise cohésion de l'ensemble ou toute ouverture des fibres intérieures ou séparation de celles-ci par rapport à la résine, dans le cas de courbures prononcées.

De ce fait, la tenue de l'élément porteur en courbure est comparable à celle des éléments porteurs à base de fibres de verre et le module de traction est beaucoup plus élevé. Cela permet notamment de fabriquer des câbles optiques avec un seul porteur central. On évite de ce fait d'avoir à renforcer le câble par une armure périphérique extérieure.

L'invention sera explicitée à l'aide des dessins. Ainsi :
- la figure 1 est une vue en coupe schématique d'un élément porteur connu.
- la figure 2 est une vue en coupe schématique d'un élément porteur selon l'invention.

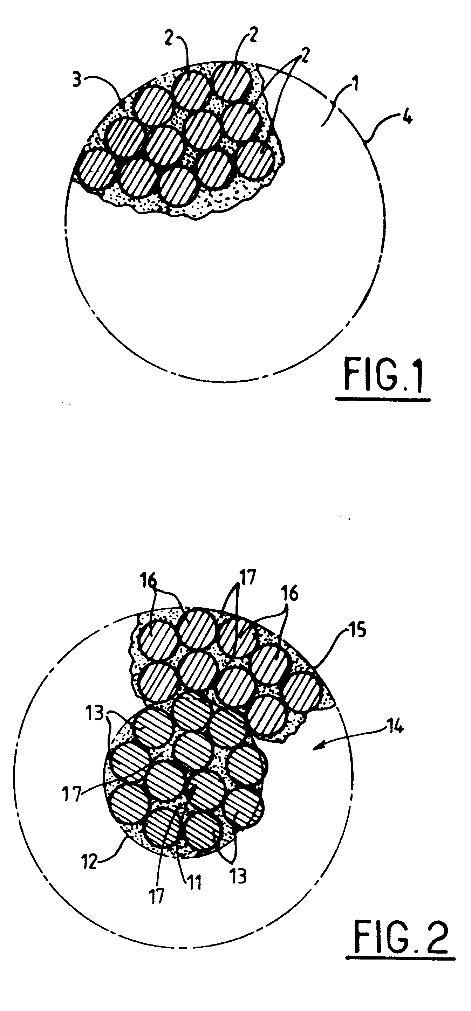

Selon la figure 1, l'élément porteur 1 connu est formé d'une répartition relativement homogène de fibres de verre noyées dans une résine 3. Le contour théorique de la section de cet élément porteur 1 est figuré par le cercle 4. Dans un but de simplification, seules quelques fibres de verre 2 ont été représentées avec seulement de la résine sur une partie de la surface totale de la section.

Selon la figure 2, l'élément porteur 10 de l'invention est formé d'une partie centrale 11 représentée schématiquement par un cercle 12 et composée de fibres aramides 13.

Cette partie centrale 11 est entourée d'une partie périphérique 14 délimitée extérieurement par un cercle 15 ; cette partie 14 est formée de fibres de verre 16.

L'intervalle tant entre les fibres 13 que les fibres 16 est occupé par une résine 17 qui est de préférence la même dans les parties 11 et 14.

Il est à remarquer que les dessins des figures 1 et 2 sont très schématiques et en particulier le contour circulaire 12 de la partie intérieure 11 et celui 15 de la partie extérieure ou périphérique 16 ne sont pas nécessairement des cercles parfaits d'autant plus que le compactage des fibres 13, 16 peut par exemple provoquer des débordements comme cela apparaît d'ailleurs à la figure 2, au niveau du cercle 12 et du dépassement de certaines des fibres 13.

Selon un exemple de réalisation, on pourra fabriquer un élément porteur d'un diamètre de 2,5 mm dont la partie centrale à base de fibres aramides aura un diamètre de 1,8 mm et la partie extérieure serait formée de fibres de verre. Le taux volumique des fibres par rapport au volume d'ensemble est alors de 75 %, la résine correspondant à 25 % .

La fabrication d'un tel élément porteur pourra se faire avec les installations existantes sachant qu'il faut positionner les fibres de façon concentrique, les fibres d'aramide étant situées au milieu et les fibres de verre à la périphérie ; cette mise en place des fibres se fait avant leur passage dans la filière de polymérisation.

Les porteurs du type de celui décrit ci-dessus sont destinés de manière avantageuse à la réalisation de câbles optiques sans que cette application ne soit nullement limitative.

Il convient de remarquer également que la section du porteur peut être différente d'une section circulaire ; elle peut être polygonale, elliptique, à méplats etc...

## Revendications

**1°)** Elément porteur notamment pour câble optique formé de fibres de verre et de résine constituant un ensemble composite, élément porteur caractérisé en ce qu'il comprend :
- une partie intérieure (11) formée de fibres aramides (13)
- une partie périphérique (14) entourant la partie intérieure (11) et formée de fibres de verre (16)
- un remplissage de l'intervalle entre toutes les fibres (aramides (13) et de verre (16)) par une résine thermodurcissable (17).

**2°)** Elément porteur selon la revendication 1, caractérisé en ce que sur la section totale de l'élément porteur, le volume des fibres représente environ 75 % à part pratiquement égale de fibres d'aramide et de fibres de verre.
